# EUROPÄISCHE PATENTSCHRIFT

(11) **EP 1 393 137 B1**
(45) Veröffentlichungstag und Bekanntmachung des Hinweises auf die Patenterteilung: **23.03.2005**
(21) Anmeldenummer: 02776492.7
(22) Anmeldetag: 05.06.2002
(51) Int. Cl.: G05B 15/02

(54) **VERFAHREN ZUM FESTLEGEN VON AUTOMATISIERTEN PROZESSEN**
METHOD FOR DETERMINING AUTOMATED PROCESSES
PROCEDE POUR DETERMINER DES PROCESSUS AUTOMATISES

(30) Priorität: 06.06.2001 AT 8792001
(43) Veröffentlichungstag der Anmeldung: 03.03.2004
(73) Patentinhaber: Automationx GmbH, 8074 Grambach (AT)
(72) Erfinder: MAITZ, Gerhard, 8055 Graz (AT); RINDLER, Franz, 8355 Tieschen (AT); MAUERHOFER, Johann, 8041 Graz (AT)
(74) Vertreter: Margotti, Herwig Franz
(86) Internationale Anmeldenummer: PCT/AT2002/000167
(87) Internationale Veröffentlichungsnummer: WO 2002/099546

(56) Entgegenhaltungen:
- WO-A-00/31597
- US-A- 5 453 933
- US-A- 5 812 394
- US-A- 6 141 595
- US-B1- 6 201 996

## Beschreibung

Die Erfindung betrifft ein Verfahren zum Festlegen von automatisierten Prozessen, welche mit Hilfe von grafischen Prozessobjekten, welche physikalische oder abstrakte Objekte repräsentieren, in Form von Prozessgrafiken dargestellt werden, wobei den Prozessobjekten Objektschnittstellen zugeordnet sind, über die die Prozessobjekte von,außen gesteuert, Eigenschaften der Prozessobjekte von außen eingestellt, oder Stati der Prozessobjekte von außen abgefragt werden können.

Der Einsatz von Computern ermöglicht heutzutage in vielen Bereichen der Industrie aber auch im privaten oder öffentlichen Bereich eine Automatisierung verschiedenster Abläufe. In der verfahrenstechnischen Industrie können beispielsweise durch den Einsatz von Computern und computergesteuerten Maschinen Herstellungs- oder Bearbeitungsprozesse zumindest teilweise automatisiert werden. Auch im Logistikbereich kommen Automatisierungen, beispielsweise in Großlagern, immer häufiger zur Anwendung. Schließlich werden auch im privaten und öffentlichen Bereich gewisse Abläufe, wie z.B. die Steuerung des Lichts oder der Heizung über Gebäudebussysteme, in zunehmendem Maße automatisiert.

Bisherige automatisierte Prozesse ließen eine Beeinflussung oder Veränderung des Prozesses von außen nur in beschränktem Ausmaß oder nur durch komplizierte und zeitaufwendige Veränderungsarbeiten, insbesondere Programmiertätigkeiten durch entsprechende Spezialisten, zu. Aus diesem Grund sind beispielsweise Herstellungsprozesse oft sehr unflexibel, weshalb auf spezielle Kundenwünsche nur beschränkt oder sehr schwer eingegangen werden kann.

Zur Festlegung automatisierter Prozesse sind nach dem Stand der Technik Verfahren bekannt, bei denen in der Regel umfassende Programmierkenntnisse erforderlich sind. Bekannte Automatisierungssysteme umfassen meist mehrere logische Schichten, von denen die unterste Schicht die Schnittstelle zum eigentlichen Prozess bzw. zu den Sensoren bzw. Aktuatoren im Prozess und die obersten Schichten Schnittstellen zu Bedienern des Verfahrens darstellen, also die Mensch/Maschinen-Schnittstellen. Für die Konfiguration der Programmanteile der einzelnen Schichten sind meist unterschiedliche Softwaretools erforderlich, zu deren Bedienung jeweils eigene Spezialisten erforderlich oder zumindest von Vorteil sind. Die Verbindung der einzelnen Schichten untereinander geschieht über Schnittstellen, welche dem jeweiligen Anwendungsfall entsprechend definiert werden müssen. In der Regel wird ein Automatisierungssystem nach dem Stand der Technik von unten nach oben, d.h. von der untersten Schicht zur obersten Schicht entwickelt. Es wird beispielsweise gemäß der sog. CIM-Pyramide (CIM - Computer Integrated Manufacturing) von der Prozessperipherie über das Steuerungsprogramm zur Visualisierung und Bedienung schließlich zur Produktionssteuerung übergegangen. Zur Entwicklung von Automatisierungsprozessen nach diesem Konzept sind entsprechend ausgebildete Spezialisten erforderlich, welche die Zusammenhänge zwischen den einzelnen logischen Schichten bei der Entwicklung der Automatisierungsprozesse kennen.

Zum leichteren Festlegen von automatisierten Prozessen wurden Verfahren entwickelt, bei welchen die Automatisierungsprozesse mit Hilfe grafischer Prozessobjekte, welche physikalische oder abstrakte Objekte repräsentieren, in Form von Prozessgrafiken dargestellt werden. Die physikalischen Objekte stehen für Einrichtungen des zu automatisierenden Verfahrens, wie beispielsweise Motoren, Bearbeitungsmaschinen oder dergl.. Abstrakte Objekte dienen zur Darstellung von bestimmten Prozessen oder Teilprozessen. Durch diese Prozessobjekte wird die Festlegung der Automatisierungsprozesse erleichtert, obgleich aufwendige Programmiertätigkeiten zur Definition und Zuordnung der Schnittstellen der Prozessobjekte nach wie vor erforderlich sind.

Zur weiteren Vereinfachung von Verfahren zum Festlegen von Automatisierungsprozessen wurde ein System entwickelt, welches vom genannten Schichtenmodell zu einem Sektorenmodell übergeht, bei dem die einzelnen Anteile der Automatisierung Sektoren repräsentieren, welche je nach Aufgabenstellung unterschiedlich stark ausgeprägt oder gar nicht vorhanden sein können. Zu derartigen Anteilen zählen beispielsweise die Steuerung, Visualisierung ein Alarmwesen, eine Bedienerschnittstelle sowie die Datenerfassung oder eine Datenevaluierung und vieles mehr. Ein solches Konzept für die Automatisierungsanteile hat den Vorteil, dass alle Anteile Schnittstellen nach außen aufweisen und somit ein Durchlaufen vieler Schichten und somit ein Definieren vieler Schnittstellen bei der Entwicklung des Automatisierungsprozesses nicht erforderlich ist. Ein derartiges Automatisierungsystem wird beispielsweise in der WO 00/31597 A2 beschrieben, bei dem die Lösung einer prozesstechnischen Aufgabenstellung durch die Bildung von sogen. Automatierungsklassen und die intuitive Kombination verschiedener Automatisierungsklassen vereinfacht wird. Darüber hinaus wird durch Aufteilung der jeweiligen Datenanteile auf unterschiedliche Rechner in einem mehrere Rechner umfassenden Rechnersystem eine Erleichterung des Verfahrens erzielt. In diesem Sinne wird eine Kategorisierung der Daten nach Server-bezogenen und Client-bezogenen Datenanteilen vorgenommen, wodurch jeweils optimal auf die Anforderungen eines bestimmten Anteils der Automatisierung eingegangen werden kann.

Bekannt sind weiters grafische Programmierverfahren oder die Anwendung grafischer Schemata von Prozessen zur Kontrolle, Überwachung und Visualisierung des Zustands bestimmter Objekte oder Variablen innerhalb eines Prozesses. Allerdings erfordern derartige bekannte grafische Entwicklungsumgebungen in der Regel spezielle Programmierkenntnisse, über die die Prozessobjekte und deren Schnittstellen definiert werden.

Beispielsweise beschreiben die DE 199 46 739 A1 sowie DE 199 46 740 A1 Verfahren zum Erstellen eines Anwendungsprogrammes für ein Automatisierungsgerät, wobei Objekte einer Anlage oder eines technischen Prozesses auf einem Bildschirm dargestellt werden, und den dargestellten Objekten mindestens ein Ereignis und ein zugehöriges Verhalten oder Ein- und/oder Ausgangssignale zugeordnet werden. Diese Verfahren dienen jedoch in erster Linie zur Festlegung der automatischen Steuerungsprogramme und nicht der Visualisierung der Prozesse beziehungsweise deren Benutzerschnittstellen. Die Schnittstellen der Prozessobjekte sind Einund/oder Ausgangssignale, also nur Daten.

Das Software-Werkzeug zur Planung einer prozessleittechnischen Anlage gemäß der DE 199 30 415 A1 dient zwar der Unterstützung bei der Festlegung automatisierter Prozesse, dabei ist jedoch ein Export und Import der Daten erforderlich, um zu einer Gesamtkonfiguration für ein bestimmtes Zielsystem zu gelangen. Dabei werden den Prozessobjekten Schnittstellen zugeordnet, welche lediglich in datenbezogenen Parametersätzen bestehen.

Die Aufgabe der vorliegenden Erfindung besteht in der Schaffung eines Verfahrens zum Festlegen von automatisierten Prozessen, welches rasch, einfach und ohne besondere Programmierkenntnisse durchführbar ist. Mit Hilfe des vorliegenden Verfahrens soll es den jeweiligen Spezialisten aus jenen Bereichen, deren Prozesse automatisiert werden sollen, möglich sein, automatisierte Prozesse ohne das Hinzuziehen speziell ausgebildeter Programmierer zu entwickeln. Mit Hilfe des vorliegenden Verfahrens soll es daher auch möglich sein, rascher auf Änderungen in den Automatisierungsprozessen einzugehen, um eine höhere Flexibilität zu erreichen.

Gelöst wird die erfindungsgemäße Aufgabe durch die Verfahrensschritte der Bildung der Prozessgrafiken aus den in einer Objektbibliothek enthaltenen, grafischen Prozessobjekten, die Auswahl von den Prozessobjekten zugeordneten Objektschnittstellen, die Auswahl und grafische Anzeige zumindest einer von mehreren in einer Programmbibliothek enthaltenen Programmstrukturen entsprechend einer gewünschten Funktion im Prozessablauf und die grafische Zuordnung zumindest einer ausgewählten Objektschnittstelle zu einer ausgewählten Schnittstelle der grafisch angezeigten Programmstruktur. Bei der erfindungsgemäßen Technik wird die Festlegung von Automatisierungsprozessen dadurch vereinfacht, dass aus den den Prozessobjekten zugeordneten Objektschnittstellen eine Auswahl getroffen wird. Die ausgewählte Objektschnittstelle des Prozessobjekts kann wiederum einer Schnittstelle einer Programmstruktur, welche eine gewünschte Funktion im Prozessablauf erfüllt, zugeordnet werden. Unter dem Begriff "Programmstrukturen" fallen Funktionsblöcke und bzw. oder Schnittstellen, welche zu einschlägigen grafischen Programmiersprachen kompatibel sind. Dazu zählen insbesondere Funktionsblöcke, Funktionsblock-Diagramme, sequentielle Flussdiagramme, sogen. Ladder-Diagramme, wie sie im Programmierstandard IEC 61131-3 definiert sind, aber auch grafische Batch-Modelle nach dem Standard ANSI/ISA-S88 bzw. sogenannte endliche Automaten (Finite State Machines) mit endlicher Anzahl von Stati. Auf diese Art ist es möglich, rasch und übersichtlich die für den Automatisierungsprozess erforderlichen Verfahrensschritte zu definieren, ohne dass spezielle Programmierkenntnisse erforderlich sind. Durch die angebotenen Objektschnittstellen ist es nicht notwendig, die prozesstechnischen Zusammenhänge zwischen den Prozessobjekten zu definieren und quasi händisch auszuprogrammieren, sondern es können diese Zusammenhänge einfach, beispielsweise durch die bekannte Drag-And-Drop-Technik, in einer grafischen Entwicklungsumgebung definiert werden. Beim vorliegenden Verfahren zur Festlegung eines automatisierten Prozesses wird bei der Konzeption des Prozessbildes begonnen, wogegen bei bekannten Verfahren die Festlegung der Prozessgrafik als letzter Schritt nach der Definition der verschiedenen Schichten, welche dem Prozess zu Grunde liegen, durchgeführt wird. Das vorliegende Verfahren erlaubt dadurch eine ganz natürliche, "intuitive" Fixierung des Automatisierungsprozesses. Ausgehend von der gestalteten Prozessgrafik können alle anderen Automatisierungsanteile intuitiv und innerhalb derselben Programmoberfläche entwickelt werden. Erleichtert wird die Entwicklung durch die den Prozessobjekten zugeordneten Objektschnittstellen sowie durch die vorgefertigten Programmstrukturen, über welche gewünschte Funktionen (z.B. logische "UND", "ODER" etc.-Funktionen) im Prozessablauf definiert und eingestellt werden können. Als Folge des vereinfachten Verfahrens kann rascher auf Änderungen im Automatisierungsprozess reagiert werden. Die erhöhte Flexibilität des automatisierten Prozesses bewirkt wiederum eine Verbreiterung der möglichen Anwendungsgebiete. Dadurch kann in der Folge beispielsweise eine Individualisierung in der industriellen Fertigung erreicht werden. Das erfindungsgemäße Verfahren ermöglicht sowohl die Steuerung und die Visualisierung als auch die Bedienung eines tatsächlich laufenden Prozesses in einem einzigen System, was durch die Mehrfacheigenschaften der Prozessobjekte und die dadurch erzwungene Datenkonsistenz zwischen dem Steuerungssystem und dem Visualisierungssystem ermöglicht wird.

Die Festlegung automatisierter Prozesse kann weiters vereinfacht werden, wenn den ausgewählten Prozessobjekten automatisch vorgefertigte Programmstrukturen zugeordnet werden. So können für entsprechende Objekte des zu automatisierenden Prozesses häufig eingesetzte oder logisch zuordenbare Funktionen angeboten werden, die vom Benützer nur mehr ausgewählt werden müssen. Danach werden die entsprechenden Zuordnungen mit den Objektschnittstellen durchgeführt.

Vorzugsweise werden Eigenschaften der Prozessobjekte über die Objektschnittstellen eingestellt. Diese Eigenschaften können je nach Prozessobjekt, d.h. je nach verwendetem physikalischen oder abstrakten Objekt, sehr unterschiedlich ausfallen. Durch entsprechende Auswahlmöglichkeiten werden dem Benutzer des erfindungsgemäßen Verfahrens die Arbeitsschritte wesentlich erleichtert.

Über die Objektschnittstellen eines Prozessobjekts kann der Status eines Prozessobjekts abgefragt werden. Man spricht in diesem Fall auch von sogen. Statusschnittstellen, welche den Zustand eines Objekts indizieren. Beispielsweise kann die Statusschnittstelle eines Prozessobjekts einen Wert liefern, der angibt, in welchem Zustand sich eine bestimmte Größe des Objekts gerade befindet.

Alternativ dazu oder zusätzlich können über die Objektschnittstelle eines Prozessobjekts Befehle an das Prozessobjekt übermittelt werden. Man spricht in diesem Fall auch von sogen. Befehlsschnittstellen, über die gewisse Befehle an aktive Prozessobjekte von außen übermittelt werden können. Derartige Befehlsschnittstellen sind zur Festlegung von Prozessen wesentlich besser geeignet. Beispielsweise können die Variablen eines Prozessobjekts durch einen entsprechenden Befehl auf einen vordefinierten Wert gesetzt werden. Der Befehl kann beispielsweise durch den Status eines (anderen) Prozessobjekts ausgelöst werden. Sowohl die bereits genannten Statusschnittstellen als auch die Befehlsschnittstellen können bei ihrer Definition und Verwendung auch die Übergabe von Parametern berücksichtigen.

Weiters können über die Objektschnittstellen eines Prozessobjekts auch Variable an das Prozessobjekt übermittelt werden. Diese Variablen sind von den über die Status- oder Befehlsschnittstellen übermittelten Parameter verschieden, weshalb auch von öffentlichen Variablen gesprochen wird. Diese dürfen, im Gegensatz zum Status eines Prozessobjekts, beispielsweise auch geschrieben und nicht nur gelesen werden. Unter öffentlichen Variablen werden jene Variablen zusammengefasst, welche für das Prozessobjekt von außen eingesehen bzw. manipuliert werden dürfen.

Gemäß einem weiteren Verfahrensmerkmal ist vorgesehen, dass die Prozessobjekte zur Unterscheidung beispielsweise durch Vergabe eindeutiger Namen instanziert werden. Darunter wird die eindeutige Zuordnung eines Prozessobjekts verstanden, welche insbesondere bei einer mehrmaligen Verwendung desselben Prozessobjekts in einer Prozessgrafik notwendig ist. Die Instanzierung wird im einfachsten Fall durch Vergabe unterschiedlicher Namen für die Prozessobjekte vollzogen. Dabei stellen die Prozessobjekte Instanzen von zugehörigen Prozessklassen dar, welche hinsichtlich der datenbezogenen Programmstrukturen und Objektschnittstellen identisch mit der Prozessklasse sind, jedoch datenmäßig individuell und durch einen eindeutigen Objektnamen unterscheidbar existieren.

Ebenso wie die Prozessobjekte können auch Programmstrukturen zur Unterscheidung, beispielsweise durch Vergabe eindeutiger Namen, instanziert werden, um eine Differenzierung gleicher Programmstrukturen in derselben Prozessgrafik zu ermöglichen.

Vor der Implementierung des automatisierten Prozesses ist es zweckmäßig, dass die für die Festlegung des automatisierten Prozesses zugeordneten Schnittstellen und Programmstrukturen überprüft werden. Eine derartige Überprüfung kann einerseits auf Plausibilität und bzw. oder auf Fehlerfreiheit erfolgen. Beispielsweise ist es für bestimmte Prozessobjekte bzw. Programmstrukturen zwingend erforderlich, bestimmte Schnittstellen zuzuordnen, anderenfalls würde eine Fehlfunktion resultieren.

Außer den in der Prozessbibliothek abgelegten Prozessobjekten können auch neu gebildete Prozessgrafiken, welche aus mehreren Prozessobjekten bestehen, oder auch neu gebildete Prozessgrafiken, welche neue Prozessobjekte repräsentieren, für eine spätere Auswahl in der Objektbibliothek abgelegt werden. Somit kann die Objektbibliothek für den jeweiligen Anwendungsbereich spezifisch erweitert werden, wodurch eine spätere Festlegung von Automatisierungsprozessen noch weiter erleichtert wird.

Ebenso wie die Objektbibliothek kann auch die Programmbibliothek, welche die vorgefertigten Programmstrukturen enthält, durch neu gebildete Programmstrukturen für eine spätere Auswahl erweitert werden.

Zur Lösung der erfindungsgemäßen Aufgabe dient auch ein Computerprogramm-Produkt, das in den Speicher eines digitalen Computers geladen werden kann und Softwarecodeabschnitte umfasst, wobei mit dem Computer die Schritte des oben beschriebenen Verfahrens abgearbeitet werden, wenn das Produkt auf dem Computer läuft.

Dabei sind die Softwarecodeabschnitte des Computerprogramm-Produkts vorzugsweise auf einem computerlesbaren Medium gespeichert.

Die vorliegende Erfindung wird anhand von bevorzugten Ausführungsbeispielen und unter Bezugnahme auf die Zeichnungen noch weiter erläutert.

Dabei zeigen:
Fig.1 eine schematische Darstellung der Anteile einer Automatisierung;
Fig.2 eine schematische Darstellung einer Einrichtung zur Ausführung des erfindungsgemäßen Verfahrens;
Fig.3 ein schematisches Flussdiagramm des gegenständlichen Verfahrens;
Fig.4 ein Beispiel für die Bildung einer Prozessgrafik;
Fig.5 ein Beispiel für ein Prozessobjekt samt Objektschnittstellen;
Fig.6 eine Prozessgrafik samt Objektschnittstellen und Programmstruktur;
Fig.7 ein Schema des gegenständlichen Verfahrens.

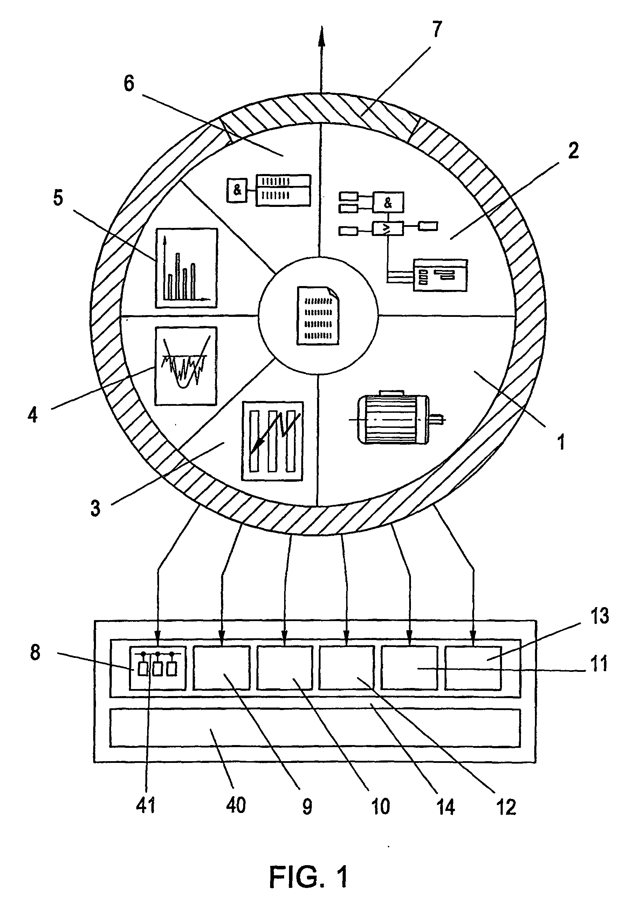

Fig.1 zeigt ein Schema der bei einem automatisierten Prozess typischerweise auftretenden Automatisierungsanteile. Dabei sind in einem geschlossenen Kreis die einzelnen Automatisierungsanteile in Form von Sektoren dargestellt, welche je nach Aufgabenstellung unterschiedlich stark ausgeprägt sein können oder überhaupt nicht vorhanden sind. Derartige Anteile umfassen beispielsweise eine Visualisierung 1, Steuerung 2, ein Alarmwesen 3, eine Trendanalyse 4, Datenerfassung 5 oder Simulation 6. Die miteinander verkapselten Automatisierungsanteile 1 bis 6 weisen untereinander, im Gegensatz zu üblichen Schichtenmodellen, keine Schnittstellen auf, sondern sind über eine gemeinsame Schnittstelle 7 mit dem Anwender bzw. Verfahrenstechniker verbunden. Im Schema gemäß Fig.1 sind unterhalb des Automatisierungssystems die Subsysteme veranschaulicht. Sie umfassen verschiedene Laufzeitsysteme bzw. Laufzeitumgebungen, in welche die Automatierungsanteile geladen werden. Unter die Laufzeitumgebungen fallen beispielsweise eine softwaremäßige Steuerungseinheit auf einem PC (Soft SPS) 13, ein Steuerungsgerät 8, ein Datenbankserver 9, ein Trendserver 10, ein Alarmserver 11 oder eine Grafikmaschine 12. Die Laufzeitumgebungen können beispielsweise auf einzelnen Terminals eines Computersystems implementiert sein, wobei die unterschiedlichen Terminals durch ein Feldbussystem 41 oder ein anderes Bussystem miteinander verbunden sind. Die verschiedenen Subsysteme kommunizieren dabei über eine zentrale Systemdatenbank 40, deren Speisung automatisch vom System, und nicht manuell vom Benutzer bzw. Anwendungsprogrammierer, vorgenommen wird.

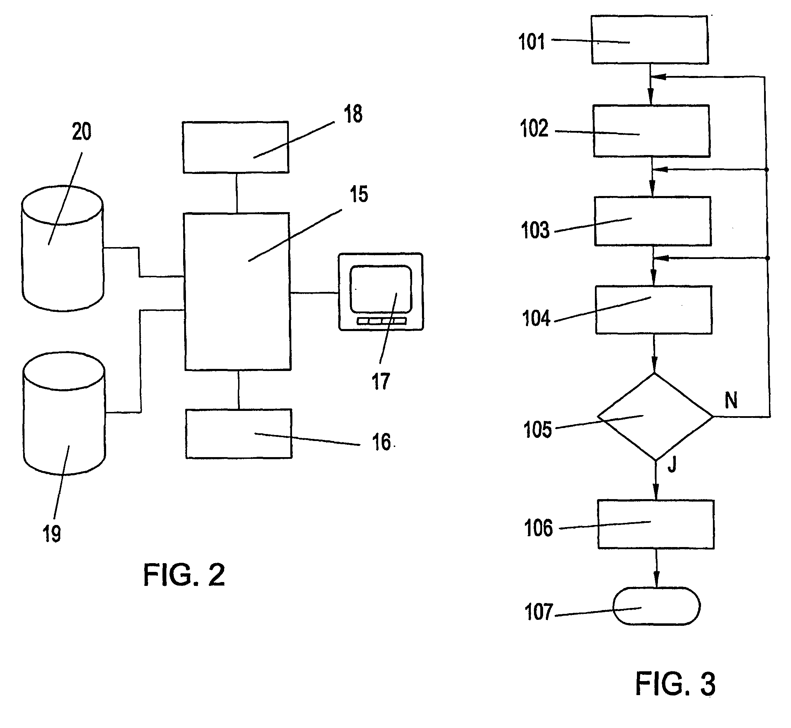

Fig.2 zeigt ein Schema einer Einrichtung zur Durchführung des vorliegenden Verfahrens bestehend aus einem Rechner 15 bzw. einem entsprechenden Rechnerverbund in einem Datennetz umfassend Eingabemittel 16, Ausgabemittel 17, insbesondere einen Bildschirm, eine Schnittstelle 18 zur Verbindung mit den zu automatisierenden Geräten sowie zumindest eine Datenbank, beispielsweise zwei Datenbanken 19, 20, welche die Objektbibliothek sowie die Programmbibliothek enthalten.

Fig.3 zeigt das Schema des vorliegenden Verfahrens zum Festlegen von automatisierten Prozessen beginnend mit Schritt 101, in dem das Verfahren durch Starten insbesondere des Softwareprogramms und Starten des grafischen Editors eingeleitet wird, worauf gemäß Schritt 102 Prozessgrafiken durch intuitive Kombination von Prozessobjekten aus einer Objektbibliothek gebildet werden. Entsprechend Schritt 103 werden die Prozessobjekte in einem prozesstechnischen Kontext eingebettet, in dem den Prozessobjekten zugeordnete Objektschnittstellen ausgewählt werden sowie vorgefertigte, in einer Programmbibliothek enthaltene Programmstrukturen entsprechend einer gewünschten Funktion im Prozessablauf ausgewählt und angezeigt werden. Im nächsten Schritt 104 des Verfahrens werden ausgewählte Objektschnittstellen zu ausgewählten Schnittstellen der grafisch angezeigten Programmstrukturen zugeordnet, worauf die Programmstruktur parametrisiert wird. Dieser Vorgang verläuft gemäß einem Drag-And-Drop-Verfahren, in dem die entsprechenden Schnittstellen unter Visualisierung auf dem Bildschirm an die entsprechenden Teile der Programmstruktur "gezogen" werden. Nach der Einbettung aller Prozessobjekt in den prozesstechnischen Kontext erfolgt gemäß Schritt 105 eine Prüfung des Systems auf Plausibilität und Fehlerfreiheit. Ergibt diese Prüfung ein negatives Ergebnis, wird je nach Fehler an der entsprechenden Stelle des Verfahrens eine Korrektur vorgenommen. Im Falle eines positiven Prüfungsergebnisses erfolgt entsprechend Schritt 106 des Verfahrens eine Aktivierung und Speicherung der Konfiguration und gegebenenfalls eine Übersetzung in den Maschinencode und ein Kompillieren des Programms. Das erstellte Programm zur Automatisierung von Prozessen wird danach in ein entsprechendes Subsystem geladen. Entsprechend Schritt 107 wird das Verfahren zur Festlegung von automatisierten Prozessen beendet.

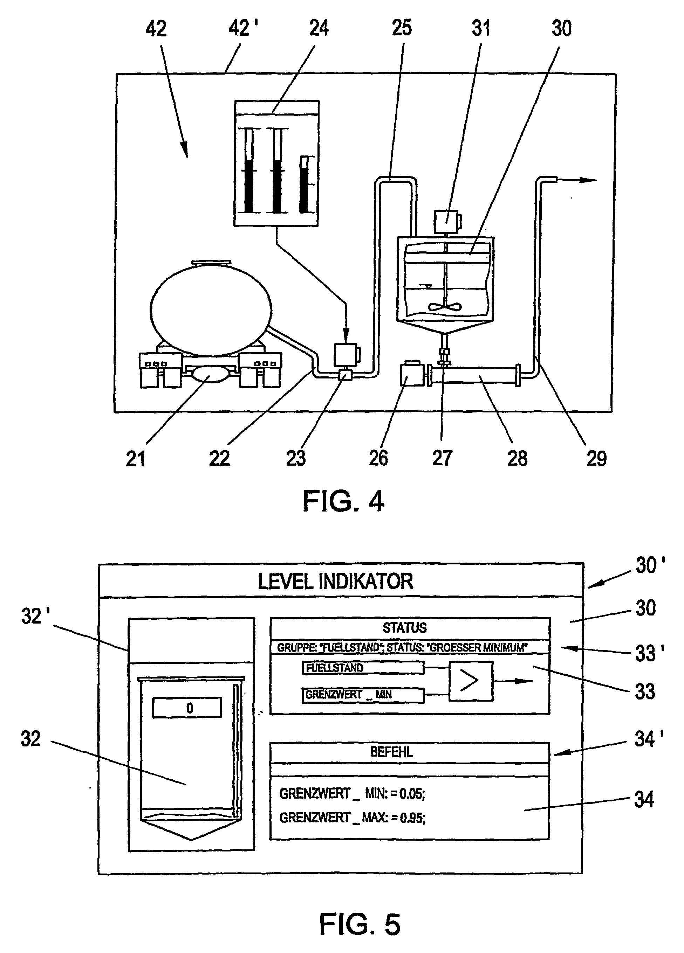

Fig.4 zeigt ein Anwendungsbeispiel für die Bildung einer Prozessgrafik 42 entsprechend Schritt 102 des Verfahrens gemäß Fig.3. Aus einer Objektbibliothek werden Prozessobjekte 21 bis 31 ausgewählt und entsprechend dem zu automatisierenden Prozess zu einer Prozessgrafik 42 zusammengesetzt, welche innerhalb eines Rahmens 42' grafisch dargestellt werden. Die Prozessobjekte 21 bis 31 können physikalische Objekte, wie ein Tankwagen 21, Motoren 23, 26, 31, Verbindungsleitungen 22, 25, 29 oder auch abstrakte Objekte, wie Prozesse oder Teilprozesse, sein. Die Zusammenstellung der Prozessgrafik 42 aus dem Prozessobjekten 21 bis 31 erfolgt in einer grafischen Umgebung, vorzugsweise unter Zuhilfenahme eines üblichen Zeigegeräts, wie einer Computermaus, durch das Drag-And-Drop-Verfahren. Die Prozessgrafik 42 ist eine schematische Nachbildung der physikalischen Verhältnisse des verfahrenstechnischen Prozesses.

Fig.5 zeigt ein Beispiel für ein in einem Rahmen 30' zusammengefasstes Prozessobjekt 30, das einen Füllstandsindikator eines Tanks, "Level Indikator", repräsentiert. Neben der grafischen Repräsentanz 32 innerhalb eines Rahmens 32' werden die zugeordneten Objektschnittstellen grafisch dargestellt. Die Schnittstellen können in grafischer Form oder textuell formuliert werden und sind gegeneinander und gegen andere Konfigurationsanteile des Prozessobjekts durch entsprechende Rahmen 33' und 34' grafisch abgegrenzt. Beim dargestellten Beispiel existiert eine Statusschnittstelle 33 sowie eine Befehlsschnittstelle 34. Die Statusschnittstelle 33 indiziert im dargestellten Beispiel, ob die Variable "Füllstand" einen bestimmten unteren Grenzwert "Grenzwert_min" übersteigt. Über die Befehlsschnittstelle 34 kann das Prozessobjekt 30 von außen gesteuert werden. Im dargestellten Beispiel sind dies beispielsweise ein unterer Grenzwert "Grenzwert_min" sowie ein oberer Grenzwert "Grenzwert_max" für die Befüllung des Tanks. Neben den Statusschnittstellen 33 und den Befehlsschnittstellen 34 existieren je nach Prozessobjekt 30 auch öffentliche Variable als Schnittstellen für Prozessobjekte, welche von außen eingesehen bzw. manipuliert werden dürfen.

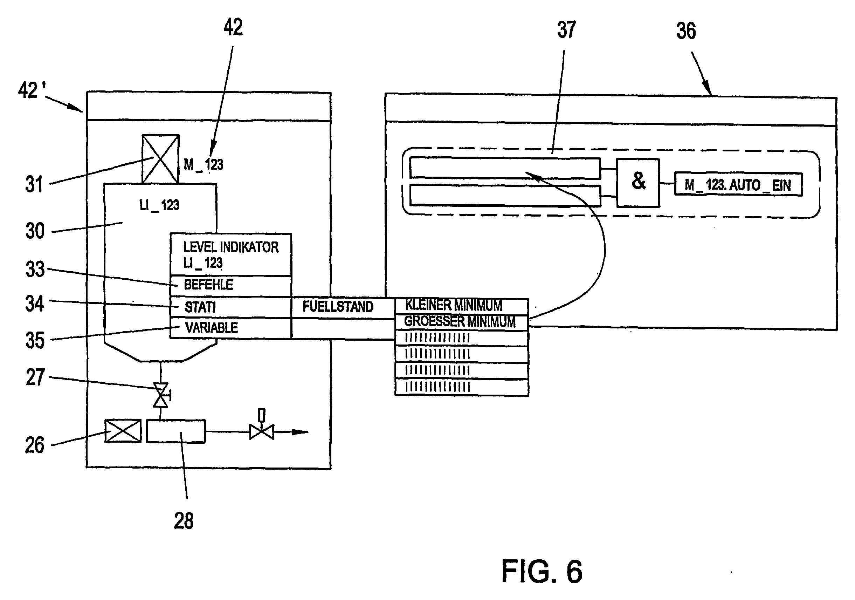

Fig.6 zeigt die weitere Durchführung des erfindungsgemäßen Verfahrens, wobei bei Auswahl eines Prozessobjekts 30 in der innerhalb eines Rahmens 42' dargestellten Prozessgrafik 42 automatisch die zugeordneten Objektsschnittstellen allenfalls unterteilt in Befehlsschnittstellen 33, Statusschnittstellen 34 und Schnittstellen 35 für öffentliche Variable grafisch angezeigt werden. In Form eines Pop-up-Menüs werden bei Auswahl der entsprechenden Schnittstelle 33 bis 35 die zugehörige Variable und Grenzwerte davon angezeigt. In einem Programmfenster 36 werden vorgefertigte Programmstrukturen 37 grafisch angezeigt. Als Programmstrukturen 37 kommen neben Funktionsblockdiagrammen auch sogenannte "Sequential Flow Chats" (SFC) gemäß IEC 61131-3 zur Anwendung. Ausgewählte Objektschnittstellen des Prozessobjekts 30, wie beispielsweise die Statusschnittstelle, wonach der Füllstand ein bestimmtes Minimum überschreitet, kann einer Schnittstelle der vorgefertigten Programmstruktur 37 einfach zugeordnet werden. Durch die vorgefertigte Programmstruktur 37 wird eine Prozesslogik realisiert, welche einen Rührwerksmotor mit der Instanzierung "M_123" einschaltet, falls der Füllstand des Tanks "123" größer als ein Minimum ist und der Gerätestatus des zugehörigen Indikators "LI_123" OK ist. Das Motorobjekt "M_123" exportiert eine öffentliche Variable namens "auto_ein", die den Automatikbetrieb steuert, d.h. wenn die Variable 1 ist, erhält der Motor einen Einschaltbefehl und zwar unter der Voraussetzung, dass sich der Motor im Automatikmodus befindet und nicht gleichzeitig eine Verriegelungsbedingung aktiv ist. Auf diese Weise wird das Prozessobjekt 30 in den prozesstechnischen Kontext eingebettet. Die Programmstrukturen 37 können vorgefertigt sein oder aus Grundelementen, wie logischen "UND"-, "ODER"-, etc. -Funktionen oder dgl., zusammengesetzt werden. Die neu gebildeten Programmstrukturen können für eine spätere Auswahl wieder in der Programmbibliothek abgelegt werden. Das Zuordnen der Objektschnittstellen und Schnittstellen der grafisch angezeigten Programmstruktur 37 erfolgt wiederum vorzugsweise durch Herüberziehen (Drag-And-Drop-Verfahren) mit Hilfe einer Computermaus oder dgl.. Die Programmstrukturen sind kompatibel zu einschlägigen grafischen Programmiersprachen bzw. Konfigurationsstandards, welche u.a. im Programmierstandard IEC 61131-3 definiert sind. Die Prozessobjekte werden entsprechend dem vorliegenden Verfahren mit Eigenschaften bzw. Programmen, die über eine Visualisierung hinausgehen, assoziiert. Bei einer späteren Verwendung der Prozessobjekte in dem Automatisierungssystem werden die assoziierten bzw. in den Prozessobjekten hinterlegten Anteile automatisch aktiviert in ein Zielsystem, wie z.B. in eine speicherprogrammierbare Steuerung (SPS), transferiert und dort zur Ausführung gebracht.

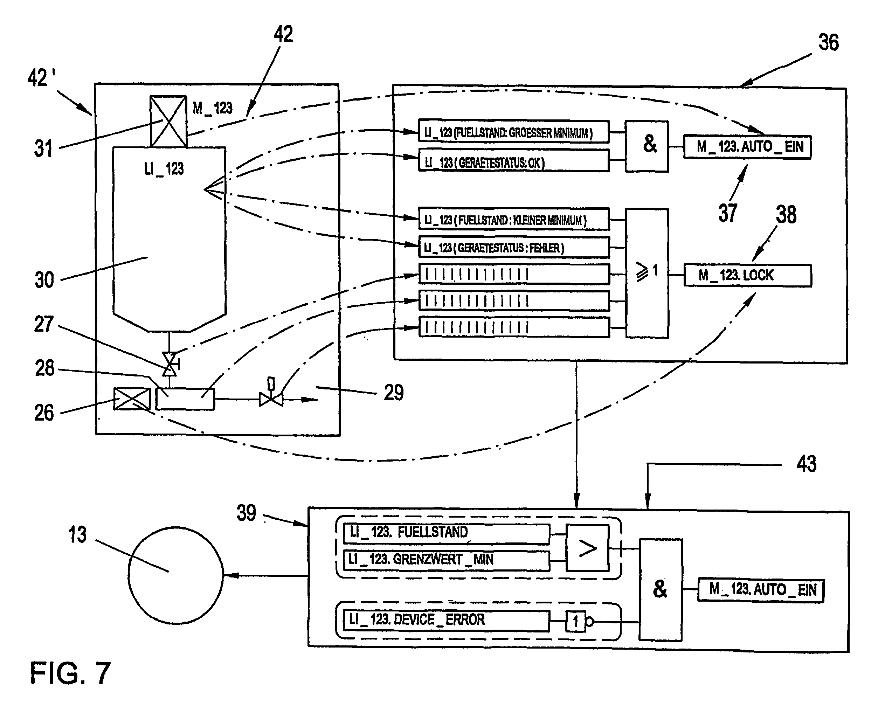

Fig.7 zeigt das gegenständliche Verfahren in schematischer Darstellung im Überblick, wobei die aus mehreren Prozessobjekten 26-31 bestehende Prozessgrafik 42 in einem Rahmen 42' grafisch dargestellt wird und im Programmfenster 36 die vorgefertigten Programmstrukturen 37, 38 zur Anzeige gebracht werden und ausgewählte Schnittstellen der Programmstrukturen 37, 38 mit ausgewählten Objektschnittstellen der Prozessobjekte verbunden bzw. zugeordnet werden. Wie bereits oben erwähnt, können die vorgefertigten Programmstrukturen 37, 38 Funktionsblockdiagramme oder sog. Sequential Flow Charts SFC gemäß IEC 61131-3 sein. Danach werden die Prozessanteile zusammengefasst und zu einem Gesamtprogramm verbunden und gleichzeitig allenfalls auch Substitutionsprozesse durchgeführt. Eine derartige Substitution der Objektschnittstellen ist im Rahmen 39 dargestellt. Im Rahmen 39 werden die speziellen Steuerungsanteile gemäß Programmfenster 36 und allgemeine Steuerungsanteile entsprechend dem Pfeil 43 zusammengefasst und zu einem Gesamtprogramm verbunden. Die allgemeinen Steuerungsanteile sind durch die Verwendung der Prozessobjekte 26-31 bedingt. Beispielsweise kann es sich dabei um die allgemeine Steuerung eines Motors, wie dem Hand-/Automatikbetrieb, Anlauf-, Lauf- oder Abschaltüberwachung, etc. handeln. Bei der Substitution wird im dargestellten Beispiel der Status "Größer Minimum" des Füllstandindikators "LI_123", der nicht direkt mit einer öffentlichen Variablen des Objekts verbunden ist, im Prozessobjekt 30 entsprechend der Beschreibung von Fig.6 entsprechend übersetzt. Zur leichteren Lesbarkeit des Programms wird am Eingang des UND-Gliedes am Rahmen 39 die Statusschnittstelle "Größer Minimum" verwendet, später jedoch gegen das im Prozessobjekt 30 hinterlegte Funktionsblockdiagramm entsprechend dem Rahmen 33' in Fig.5 für diese Schnittstelle substituiert. Schließlich erfolgt das Laden des Gesamtprogramms in das Zielsystem, beispielsweise ein entsprechendes Steuergerät.

Das vorliegende Verfahren realisiert ein grafisch intuitives Programmierverfahren zur Festlegung von automatisierten Prozessen. Das Verfahren zeichnet sich dadurch aus, dass einschlägiges Fachpersonal, insbesondere Verfahrenstechniker, Maschinenbauer, Qualitäts- und Produktionsmanager, auch ohne spezielle Kenntnisse in der Informationstechnologie oder der Steuerungstechnik, in der Lage ist,.automatisierungstechnische Gesamtsysteme zu realisieren. Diese Realisierung erfolgt innerhalb einer grafischen Bedieneroberfläche eines Prozessgrafik-Editors und kann in einfacher Weise, beispielsweise mit Hilfe einer Computermaus, nach dem Drag-And-Drop-Verfahren ausgeführt werden.

Neben der Festlegung von automatisierten Prozessen dient das vorliegende Verfahren auch beispielsweise zur intuitiven Konfiguration von Datenbankprogrammen beliebiger Datenbanksysteme mit offenen Schnittstellen, insbesondere SQL-Schnittstellen.

Das Verfahren ist auf beliebige grafische Programmiersprachen bzw. Zielsysteme anwendbar.

## Patentansprüche

1. Verfahren zum Festlegen von automatisierten Prozessen, welche mit Hilfe von grafischen Prozessobjekten, welche physikalische oder abstrakte Objekte repräsentieren, in Form von Prozessgrafiken dargestellt werden, wobei den Prozessobjekten Objektschnittstellen zugeordnet sind, über die die Prozessobjekte von außen gesteuert, Eigenschaften der Prozessobjekte von außen eingestellt oder Stati der Prozessobjekte von außen abgefragt werden können, **gekennzeichnet durch**
- die Bildung der Prozessgrafiken aus den, in einer Objektbibliothek enthaltenen, grafischen Prozessobjekten,
- die Auswahl von, den Prozessobjekten zugeordneten Objektschnittstellen,
- die Auswahl und grafische Anzeige zumindest einer von mehreren in einer Programmbibliothek enthaltenen Programmstrukturen entsprechend einer gewünschten Funktion im Prozessablauf, und
- die grafische Zuordnung zumindest einer ausgewählten Objektschnittstelle zu einer ausgewählten Schnittstelle der grafisch angezeigten Programmstruktur.

2. Verfahren nach Anspruch 1, **dadurch gekennzeichnet, dass** den ausgewählten Prozessobjekten vorgefertigte Programmstrukturen automatisch zugeordnet werden.

3. Verfahren nach Anspruch 1 oder 2, **dadurch gekennzeichnet, dass** Eigenschaften der Prozessobjekte über die Objektschnittstellen eingestellt werden.

4. Verfahren nach einem der Ansprüche 1 bis 3, **dadurch gekennzeichnet, dass** über die Objektschnittstelle eines Prozessobjekts der Status des Prozessobjekts abgefragt wird.

5. Verfahren nach einem der Ansprüche 1 bis 4, **dadurch gekennzeichnet, dass** über die Objektschnittstelle eines Prozessobjekts Befehle an das Prozessobjekt übermittelt werden.

6. Verfahren nach einem der Ansprüche 1 bis 5, **dadurch gekennzeichnet, dass** über die Objektschnittstelle eines Prozessobjekts Variable an das Prozessobjekt übermittelt werden.

7. Verfahren nach einem der Ansprüche 1 bis 6, **dadurch gekennzeichnet, dass** die Prozessobjekte zur Unterscheidung beispielsweise durch Vergabe eindeutiger Namen instanziert werden.

8. Verfahren nach einem der Ansprüche 1 bis 7, **dadurch gekennzeichnet, dass** die Programmstrukturen zur Unterscheidung beispielsweise durch Vergabe eindeutiger Namen instanziert werden.

9. Verfahren nach einem der Ansprüche 1 bis 8, **dadurch gekennzeichnet, dass** die für die Festlegung des automatisierten Prozesses zugeordneten Schnittstellen und Programmstrukturen überprüft werden.

10. Verfahren nach einem der Ansprüche 1 bis 9, **dadurch gekennzeichnet, dass** gebildete Prozessgrafiken als Prozessobjekte in der Objektbibliothek für eine spätere Auswahl abgelegt werden.

11. Verfahren nach einem der Ansprüche 1 bis 10, **dadurch gekennzeichnet, dass** neu gebildete Programmstrukturen in der Programmbibliothek für eine spätere Auswahl abgelegt werden.

12. Computerprogrammprodukt, das in den Speicher eines digitalen Computers geladen werden kann und Softwarecodeabschnitte umfasst zur Durchführung des Verfahrens gemäß einem der Ansprüche 1 bis 11, wenn das Produkt auf dem Computer läuft.

13. Computerprogrammprodukt nach Anspruch 12, wobei die Softwarecodeabschnitte auf einem computerlesbaren Medium gespeichert sind.

## Claims

1. A method of determining automated processes which are displayed by means of graphic process objects representative of physical or abstract objects in the form of process charts, wherein object interfaces are allocated to the process objects via which object interfaces the process objects can be controlled from outside, properties of the process objects can be adjusted from outside or statuses of the process objects can be queried from outside,
**characterized by**
- the generation of the process charts from the graphic process objects contained in an object library,
- the selection of object interfaces allocated to the process objects,
- the selection and graphic display of at least one of several program architectures contained in a program library according to a desired function in the process flow, and
- the graphic allocation of at least one selected object interface to a selected interface of the graphically displayed program architecture.

2. A method according to claim 1, **characterized in that** prefabricated program architectures are automatically allocated to the selected process objects.

3. A method according to claim 1 or 2, **characterized in that** properties of the process objects are adjusted via the object interfaces.

4. A method according to any of claims 1 to 3, **characterized in that** the status of the process object is queried via the object interface of a process object.

5. A method according to any of claims 1 to 4, **characterized in that** commands are transmitted to the process object via the object interface of a process object.

6. A method according to any of claims 1 to 5, **characterized in that** variables are transmitted to the process object via the object interface of a process object.

7. A method according to any of claims 1 to 6, **characterized in that**, for the purpose of differentiation, the process objects are instanced, for example, by the allocation of distinguished names.

8. A method according to any of claims 1 to 7, **characterized in that**, for the purpose of differentiation, the program architectures are instanced, for example, by the allocation of distinguished names.

9. A method according to any of claims 1 to 8, **characterized in that** the interfaces and program architectures allocated for the determination of the automated process are checked.

10. A method according to any of claims 1 to 9, **characterized in that** process charts that were generated are filed as process objects in the object library for a later selection.

11. A method according to any of claims 1 to 10, **characterized in that** newly generated program architectures are filed in the program library for a later selection.

12. A computer program product which can be loaded into the memory of a digital computer and comprises software code sections, for carrying out the method according to any of claims 1 to 11, if the product runs on the computer.

13. A computer program product according to claim 12, wherein the software code sections are stored on a machine-readable medium.

## Revendications

1. Procédé pour déterminer des processus automatisés, lesquels sont représentés sous la forme de graphiques de processus à l'aide d'objets graphiques de processus, lesquels représentent des objets physiques ou abstraits, sachant que des interfaces objet sont attribuées aux objets de processus, par le biais desquelles les objets de processus peuvent être commandés de l'extérieur, les caractéristiques des objets de processus peuvent être réglées de l'extérieur ou les états des objets de processus peuvent être interrogés de l'extérieur, **caractérisé par** la formation de graphiques de processus à partir des objets graphiques de processus contenus dans une bibliothèque d'objets, par la sélection d'interfaces objet attribuées aux objets de processus, par la sélection et l'affichage graphique d'au moins une des différentes structures de programme comprises dans une bibliothèque de programmes conformément à une fonction souhaitée dans le déroulement du processus, et par l'attribution graphique d'au moins une interface objet sélectionnée à une interface sélectionnée de la structure du programme affichée graphiquement.

2. Procédé selon la revendication 1, **caractérisé en ce que** des structures de programme préfabriquées sont automatiquement attribuées aux objets sélectionnés de processus.

3. Procédé selon la revendication 1 ou 2, **caractérisé en ce que** les caractéristiques des objets de processus sont réglées via les interfaces objet.

4. Procédé selon l'une des revendications 1 à 3, **caractérisé en ce que** l'état de l'objet de processus est interrogé par le biais de l'interface objet d'un objet de processus.

5. Procédé selon l'une des revendications 1 à 4, **caractérisé en ce que** des instructions sont transmises à l'objet de processus via l'interface objet d'un objet de processus.

6. Procédé selon l'une des revendications 1 à 5, **caractérisé en ce que** des variables sont transmises à l'objet de processus via l'interface objet d'un objet de processus.

7. Procédé selon l'une des revendications 1 à 6, **caractérisé en ce que** des instances sont créées pour les objets de processus en vue de les distinguer par exemple par l'attribution de noms clairs.

8. Procédé selon l'une des revendications 1 à 7, **caractérisé en ce que** des instances sont créées pour les structures de programme en vue de les distinguer par exemple par l'attribution de noms clairs.

9. Procédé selon l'une des revendications 1 à 8, **caractérisé en ce que** les interfaces et les structures de programmes attribuées pour la détermination du processus automatisé sont contrôlées.

10. Procédé selon l'une des revendications 1 à 9, **caractérisé en ce que** des graphiques de processus formés comme objets de processus sont déposés dans la bibliothèque d'objets en vue d'une sélection ultérieure.

11. Procédé selon l'une des revendications 1 à 10, **caractérisé en ce que** des structures de programme nouvellement formées sont déposées dans la bibliothèque de programmes en vue d'une sélection ultérieure.

12. Produit de programme informatique qui peut être chargé dans la mémoire d'un ordinateur numérique et qui comprend des parties de code logiciel pour exécuter le procédé selon l'une des revendications 1 à 11, lorsque le produit fonctionne sur l'ordinateur.

13. Produit de programme informatique selon la revendication 12, les parties de code logiciel étant mémorisées sur un support lisible par ordinateur.
